# EUROPÄISCHE PATENTSCHRIFT

(11) **EP 1 199 576 B1**
(45) Veröffentlichungstag und Bekanntmachung des Hinweises auf die Patenterteilung: **24.09.2003**
(21) Anmeldenummer: 01117506.4
(22) Anmeldetag: 20.07.2001
(51) Int. Cl.: G01R 31/26

(54) **Vorrichtung zum Prüfen von Solarzellen**
Device for testing solar cells
Dispositif pour tester des cellules solaires

(30) Priorität: 17.10.2000 DE 10051357
(43) Veröffentlichungstag der Anmeldung: 24.04.2002
(73) Patentinhaber: ACR Automation in Cleanroom GmbH, 78078 Niedereschach (DE)
(72) Erfinder: Schutt, Carla, 61476 Kronberg/Ts. (DE)
(74) Vertreter: Dreiss, Fuhlendorf, Steimle & Becker

(56) Entgegenhaltungen:
- EP-A- 0 756 178
- EP-A- 0 887 652
- US-A- 5 217 285
- SALA G ET AL: "Continuous irradiance solar simulator to characterize photovoltaic modules" PROCEEDINGS OF MELECON '85. MEDITERRANEAN ELECTROTECHNICAL CONFERENCE (CAT. NO.85CH2185-7), MADRID, SPAIN, 8-10 OCT. 1985, Seiten 129-132 vol.4, XP002158950 1985, New York, NY, USA, IEEE, USA
- PATENT ABSTRACTS OF JAPAN vol. 1999, no. 09, 30. Juli 1999 (1999-07-30) & JP 11 108844 A (ASAHI GLASS CO LTD), 23. April 1999 (1999-04-23)
- PATENT ABSTRACTS OF JAPAN vol. 012, no. 104 (P-685), 6. April 1988 (1988-04-06) & JP 62 237338 A (WAKOMU:KK), 17. Oktober 1987 (1987-10-17)

## Beschreibung

Die Erfindung betrifft eine Vorrichtung der im Oberbegriff des Anspruches 1 angegebenen Gattung.

Bekannte Vorrichtungen dieser Art bestehen in der Regel aus einer zusammenhängenden Baueinheit, auch Lichtsimulatoren genannt, die wenigstens eine Lampe, ein steuerbares Energieversorgungsteil, ein Kühlaggregat, eine optische Filtereinheit und eine Detektoreinheit zur Lichtintensitätsüberwachung oder dgl. enthält. Dabei beinhalten die Lampen metallhalogenide Dampf- oder Xenon-Gasfüllungen oder deren Gemische, die in ihrer Funktion als Dauerlichtstrahler Anwendung finden. Oft werden auch mehrere Lampen in Kombination mit zusätzlichen Filtern eingesetzt. Diese Baueinheiten werden auch als Dauerlicht-Simulatoren bezeichnet (US 7394993, JP 57179674, US 5217285). Derartige Vorrichtungen werden z.B. zur Solarzellenmessung in Entwicklungslabors oder bei der Qualitätssicherung in Produktionanlagen eingesetzt.

Es sind weiterhin andere Vorrichtungen bekannt, die ein- oder mehrfach Xenonblitzröhren benutzen, wobei die Blitzzeitenergien einstellbar sind. Diese im allgemeinen als Flasher oder Pulslicht-Simulatoren bezeichneten Vorrichtungen (JP 11317535, US 3950862, JP 3154840) werden zur Messung von Solarzellen während des Produktionsprozesses angewandt.

Die beschriebenen bzw. aufgeführten Vorrichtungen haben trotz kompakter Bauweise einen großen Raumbedarf, einen hohen Energiebedarf durch die verwendeten Gasentladungslampen bzw. durch die Bereitstellung von kurzzeitig hohen Pulsenergien.

Die mit hoher Strahlungsenergie betriebenen Dauerlicht- bzw.

Pulslichtsimulatoren haben für den Einsatz im quasi kontinuierlichen Produktionsprozeß von Solarzellen eine durchschnittliche Betriebszeit von 750 bzw. 9 Stunden bei einem z.B. 3 Sekundentakt, unter Voraussetzung, daß der Spektalbereich der emitierten Strahlung noch im geforderten Bereich liegt.

Der Erfindung liegt daher die Aufgabe zugrunde, die Vorrichtung der eingangs bezeichneten Gattung so auszubilden, daß sie sich insbesondere zur Anwendung in der Qualitätsüberwachung bei der Solarzellenfertigung eignet, konstruktiv einfach hergestellt werden kann und platz- sowie energiesparend ausgebildet ist.

Diese Aufgabe wird erfindungsgemäß dadurch gelöst, daß die Lichtquelle eine Matrix aus Festkörperlichtquellen mit im wesentlichen monochromatischer Strahlung im bevorzugten spektralen Empfindlichkeitsbereich der zu messenden Solarzellen ist und die Einrichtung zum Ansteuern der Lichtquelle einen Stromstärkeregler aufweist.

Die erfindungsgemäße Vorrichtung bringt den Vorteil mit sich, daß die in Lichtsimulatoren verwendeten, meist einzelnen Strahlungsquellen auf Gasentladungsbasis hoher Intensität durch eine Vielzahl von physikalisch gleichen Festkörperstrahlungsquellen mit geringer Intensität aber höherem Wirkungsgrad ersetzt werden. Dadurch kann der Raum- und Energiebedarf erheblich reduziert werden und die Lebensdauer steigt in bedeutend hohem Maße. Bei der Produktionsüberwachung bzw. Funktionsprüfung von Solarzellen hat sich herausgestellt, daß die angestrebte Nachbildung des Sonnenspektrums nicht zwingend notwendig ist. Eine derartige Prüfung kann mit einem durch Festkörperstrahlungsquellen bereitgestellten, eingeschränkten Spektrum erzeugt werden. Darüber hinaus verändern die Festkörperlichtquellen bei Variation der Leistung (z.B. Dimmen) nicht ihre spektrale Verteilung.

Für die Prüfung von Si-Solarzellen weist die Vorrichtung vorteilhafterweise Festkörperlichtquellen auf, die eine Strahlung im Bereich von 880 nm aussenden. Die Matrixlichtquelle ist vorteilhafterweise zur Abgabe einer spezifischen Strahlungsleistung von 1200 W/m² bei 25°C ausgelegt. Diese Bedingungen werden bei den derzeit eingesetzten Vorrichtungen für die Prüfung von Solarzellen zugrundegelegt, so daß mit der vorliegenden Erfindung dieses Marktsegment abgedeckt werden kann. Die vorstehend genannte spektrale Empfindlichkeit der verwendeten Festkörperlichtquellen gilt ausführungsgemäß nur optimal für Siliziumzellen. Bei der Prüfung von Dünnfilm- bzw. Dünnschichtzellen oder anderen fotovoltaisch genutzten Verbindungshalbleitern können andere Lichtspektren erforderlich sein. Dementsprechend werden für Solarzellen aus anderen heute bekannten Technologien Festkörperlichtquellen mit anderen spezifischen spektralen Empfindlichkeiten eingesetzt.

Darüber hinaus können mit der Vorrichtung auch CdTe-Solarzellen mit einer Strahlung im Bereich von 700 nm oder CIS-Solarzellen mit einer Strahlung im Bereich von 600 nm bei Abgabe einer spezifischen Strahlungsleistung der Matrixlichtquelle von 1200 W/m² bei 25°C geprüft werden. Eine Prüfung anderer Arten von Solarzellen ist ebenfalls möglich.

In einer günstigen Ausführungsform weist die Matrixlichtquelle für die Prüfung von 10 x 10 cm Solarzellen mindestens 400 Festkörperlichtquellen auf. Mit Hilfe dieser Anzahl von Festkörperlichtquellen wird die geforderte Leistung zur Prüfung von Solarzellen bereitgestellt.

In einer bevorzugten Ausführungsform sind die Festkörperlichtquellen LEDs mit linsenförmigen Strahlungsöffnungen, und ihre matrixartige Anordnung bildet im Abstand von 4,3 mm ± 10 % eine annähernd homogene Strahlungsfläche. Der Vorteil liegt hierin in der einheitlichen Leuchtfläche, mit der ein gleichmäßiges Lichtfeld erzeugt wird.

Vorteilhafterweise ist die Einrichtung zum Steuern der abgegebenen Lichtleistung der Lichtquelle in eine rechnergesteuerte Auswerteeinheit integriert. In einer günstigen Ausführungsform umfaßt die Einrichtung zur Steuerung der abgegebenen Lichtleistung eine rechnergesteuerte Stromquelle mit einem Referenzlichtquellen-Rückkopplungsnetzwerk- Hierdurch werden Alterserscheinungen und/oder Temperaturabweichungen der Matrixlichtquelle kompensiert.

Bei einer bevorzugten Ausführungsform ist die Matrixlichtquelle modular aufgebaut und durch Zusatzmodule erweiterbar.

Vorteilhafterweise ist die Matrixlichtquelle als XY-Matrix ausgebildet und die Ströme der Festkörperlichtquellen sind individuell steuerbar. Zum Erzeugen einer gewünschten spektralen Verteilung kann die Matrixlichtquelle Gruppen von Festkörperlichtquellen unterschiedlicher spektraler Lichtaussendung zusammengesetzt sein, wobei durch geeignete Ansteuerung der Gruppen ein gewünschtes Mischspektrum erzeugbar ist. Die Verwendung von LEDs mit unterschiedlichen spektralen Empfindlichkeiten läßt die Kombination einer Mischlichterzeugung zu, die mit entsprechendem Aufwand durchaus auch die Generierung eines AM 1,5-Spektrums möglich macht, obwohl sich dies für reine Prüfzwecke nicht als erforderlich erwiesen hat.

Weiterhin ist es möglich, die quadratisch ausgebildete Matrixlichtquelle durch rechteckige oder krummlinige Formen, insbesondere Kreise, zu ersetzen.

Die Erfindung wird nachfolgend in Verbindung mit den beiliegenden Zeichnungen an Ausführungsbeispielen erläutert. Es zeigen:
- Fig. 1: schematisch eine mit einer Matrixlichtquelle ausgestattete Vorrichtung zur Prüfung von Solarzellen;
- Fig. 2: schematisch die eigentliche Matrixlichtquelle mit LEDs und Ansteuernetzwerk, Referenzmeßanordung inkl. Rückkopplungsnetzwerk sowie Stromversorgung.;
- Fig. 3: schematisch die Referenzmeßanordung mit Referenz LED's, Lichtanpassungsfilter und Auswertesensor;
- Fig. 4: schematisch die modular erweiterte Doppelmatrixlichtquelle für flächenmäßig größere Prüflinge z.B. Photovoltaikmodule;
- Fig. 5: schematisch eine Matrixlichtquellenanordung mit x-y Ansteuerung zur Prüfung der Homogenität von Solarzellen.

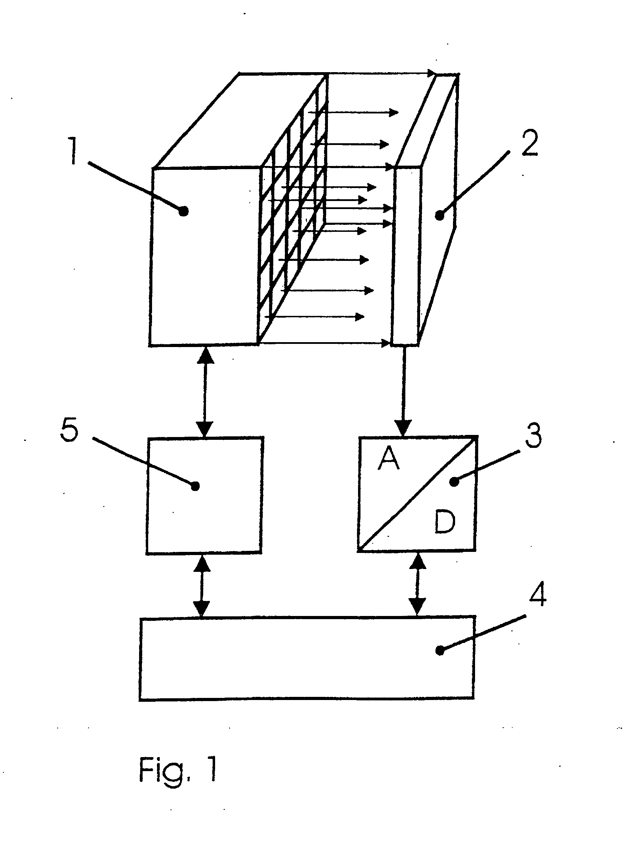

Fig. 1 zeigt eine Vorrichtung zur Messung von Solarzellen mit einer Matrixlichtquelle 1, bestehend aus einer Vielzahl von Festkörperlichtquellen, die von einer rechnergesteuerten Stromquelle 5 mit Energie versorgt werden. Die Festkörperlichtquellen sind von ihrer spektralen Lichtemision so bemessen, daß ihre ausgestrahlte Lichtenergie im optimalen spektralen Empfindlichkeitsbereich von Solarzellen 2 in elektrischen Strom gewandelt werden kann. Der generierte Meßstrom ist direkt proportional der Strahlungsenergie. Über einen Analog-/Digital-Umsetzer 3 wird der analoge Meßstrom in ein digitales Meßsignal umgewandelt, um in einer Auswerteeinheit/Meßrechner 4 weiterverarbeitet zu werden.

Erfindungsgemäß werden als Festkörperlichtquellen LED's im spektralen Bereich von 880 nm benutzt, weil die Strahlungsenergie bei dieser Wellenlänge am Besten von den Silizium-Solarzellen umgesetzt wird. Hierbei wird zuerst eine kalibrierte Referenzzelle in einer definierten Zeiteinheit und mit einer definiert ansteigenden Strahlungsleistung der Matrixlichtquelle 1 über den geregelten Diodenstrom der rechnergesteuerten Stromquelle 5 beaufschlagt. Bis zu einem Kalibrierwert von 1000 W/m² wird der dazugehörige generierte Strom bzw. eine Spannung über einen Meßshunt aufgezeichnet. Dabei hat die Referenzzelle eine Meßtemperatur von *25°C* (STC).

Nach diesem Kalibriervorgang der in Fig. 1 dargestellten Meßvorrichtung kann jede beliebige Solarzelle bzw. jeder entsprechende Strahlungssensor gleichen Zellmaterials bestrahlt und der mit der Einstrahlung korrelierende Meßstrom ermittelt werden. Abweichungen dieses Meßstroms von dem der Referenzzelle werden über Korrekturfaktoren bzw. Kalibrierkurven berücksichtigt.

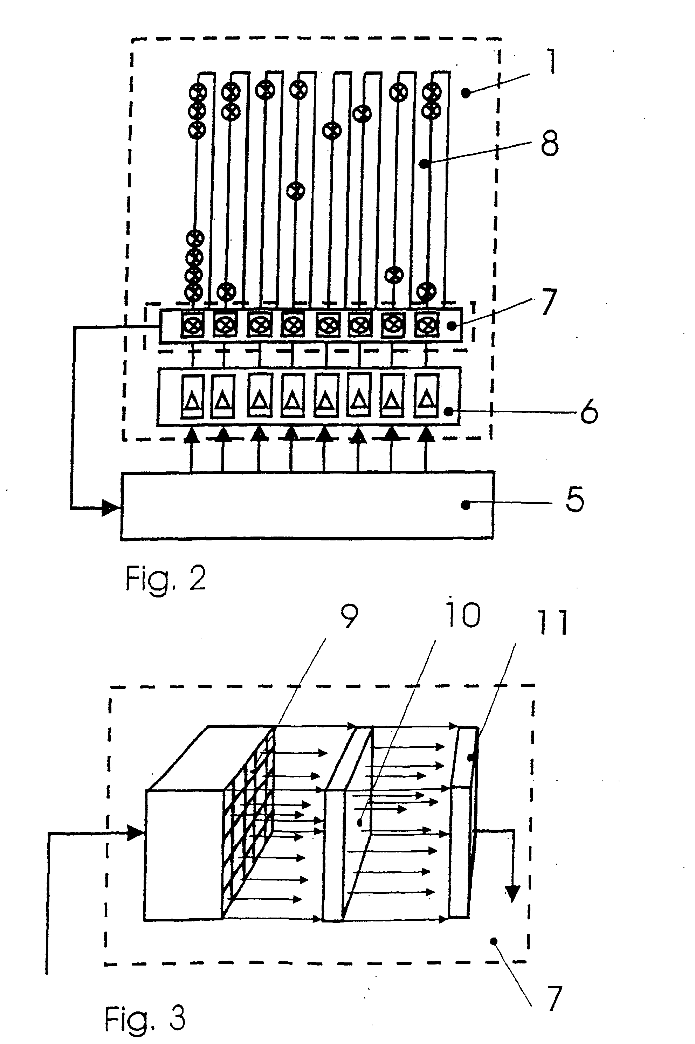

In Fig. 2 ist die aus Fig. bekannte Matrixlichtquelle 1 in Einzelheiten dargestellt. Im vorliegenden Ausführungsbeispiel sind die einzelnen LEDs in mindestens 20 parallelen Strängen (Spalten) und diese wiederrum als Reihenschaltung (Zeilen) von mindestens 20 LEDs flächig auf einer Matrixlichtquellenleiterplatte 8 aufgebaut. Die einzelnen LED-Stränge werden über Treiberbausteine 6 von einer rechnergesteuerten Stromquelle 5 mit einem definierten Strom versorgt. Zur Überwachung und Regelung der Strangströme wird aus jedem Strang eine LED strahlungsmäßig so ausgekoppelt, daß diese in einem Referenzlichtquellen-Rückkopplungsnetzwerk 7 ausgewertet werden können.

Fig. 3 stellt dieses Referenzlichtquellen-Rückkopplungsnetzwerk 7 in erfindungsgemäßen Einzelheiten dar. Die strahlungsmäßig ausgekoppelten Referenz- LEDs 9 sind im vorliegenden Ausführungsbeispiel ebenfalls als matrixförmige Lichtquelle ausgebildet. Über einen Anpassungsfilter 10 wird eine Solarzelle oder ein Lichtsensorchip 11 bestrahlt. Da über den Strom der LEDs die Lichtstärke der Matrixlichtquelle 1 eingestellt werden kann, dient das Referenzlichtquellen-Rückkcopplungsnetzwerk 7 als Kompensationseinrichtung für Alterungserscheinungen bzw. Temperaturabweichungen der Matrixlichtquellenleiterplatte 8.

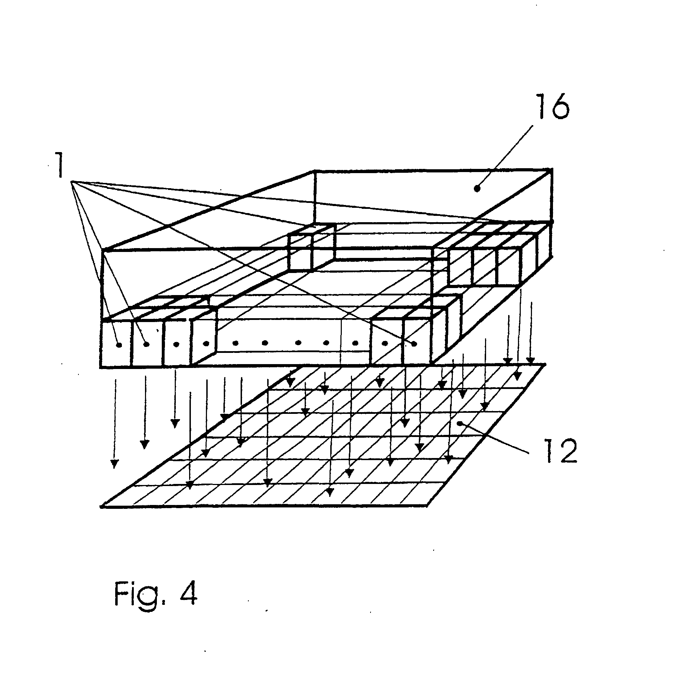

In Fig. 4 ist die in Fig.2 bereits beschriebene Matrixlichtquelle 1 erfindungsgemäß in modularer Erweiterung als großflächige Doppelmatrixlichtquelle 16 dargestellt. Gemäß Ausführungsbeispiel können hier die Meßaufgaben, wie oben bereits unter Fig. 1 beschrieben, beispielhaft für Photovoltaikmodule 12 durchgeführt werden.

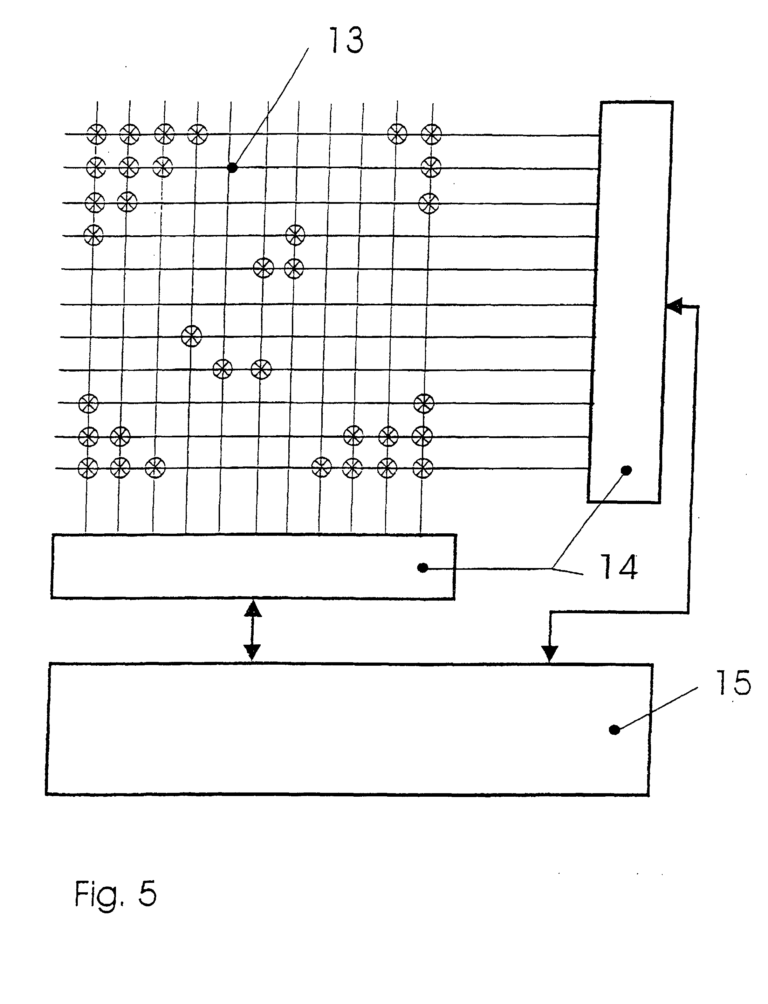

Fig. 5 zeigt das Beispiel einer XY-Matrixlichtquelle 13 mit entsprechend modifizierter elektronischer Leiterplatte, der Decoderbaugruppe 14 für x-Zeilen und y-Spalten und einer programierbaren Stromquelle 15 . Gemäß Ausführungsbeispiel geschieht die Einzelstromüberwachung in der programmierbaren Stromquelle. Erfindungsgemäß wird für die Prüfung der Homogenität von Solarzellen ein Lichtimpuls definierter Amplitude und Form gewählt, um im Erzeugungsvorgang möglichst keine Störungen zu verursachen und diesen einfach auszuwerten zu können.

## Patentansprüche

1. Vorrichtung zum Prüfen von Solarzellen mit
einer definierten Matrixlichtquelle (1) zur Bestrahlung der Solarzellen (2),
einer Einrichtung zum Ansteuern der Lichtquelle mit einem Stromstärkeregler sowie
einer Auswerteeinheit (4) zur elektrischen Verbindung mit einer zu prüfenden Solarzelle (2) und zum Erfassen der von der bestrahlten Solarzelle abgegebenen elektrischen Leistung und gegebenenfalls zum Vergleich mit der Leistung einer geeichten Referenzzelle (11),
**dadurch gekennzeichnet, dass**
die Matrixlichtquelle aus Festkörperlichtquellen aufgebaut ist, deren Strahlungsemission im wesentlichen monochromatisch und im bevorzugten spektralen Empfindlichkeitsbereich der zu messenden Solarzellen (2) erfolgt.

2. Vorrichtung nach Anspruch 1, zur Prüfung von Si-Solarzellen (2), insbesondere unter Abgabe einer spezifischen Strahlungsleistung von 1200 W/m² bei 25°C,
**dadurch gekennzeichnet, dass**
die Matrixlichtquelle Festkörperlichtquellen aufweist, die eine Strahlung mit einem Maximum im infraroten Bereich, vorzugsweise bei 880 nm, aussenden.

3. Vorrichtung nach Anspruch 1, zur Prüfung von CIS- oder CdTe-Solarzellen (2), insbesondere unter Abgabe einer spezifischen Strahlungsleistung von 1200 W/m² bei 25°C,
**dadurch gekennzeichnet, dass**
die Matrixlichtquelle Festkörperlichtquellen aufweist, die eine Strahlung mit einem Maximum im roten Bereich, vorzugsweise bei 600nm oder 700nm, aussenden.

4. Vorrichtung nach Anspruch 1, zur Prüfung von Solarzellen (2) aus amorphem Silizium, insbesondere unter Abgabe einer spezifischen Strahlungsleistung von 1200 W/m² bei 25°C,
**dadurch gekennzeichnet, dass**
die Matrixlichtquelle Festkörperlichtquellen aufweist, die eine Strahlung mit einem Maximum im blauen oder blauvioletten Bereich, vorzugsweise bei 450nm, aussenden.

5. Vorrichtung nach Anspruch 1 oder 2-4,
**dadurch gekennzeichnet, dass**
die Matrixlichtquelle für die Prüfung von 10 x 10 cm Solarzellen mindestens 400 Festkörperlichtquellen aufweist.

6. Vorrichtung nach mindestens einem der Ansprüche 1-5,
**dadurch gekennzeichnet, dass**
die Festkörperlichtquellen LED mit linsenförmigen Strahlungsöffnungen sind und
ihre matrixartige Anordnung im Abstand von 4,3 mm ± 10 % eine annähernd homogene Strahlungsfläche bildet.

7. Vorrichtung nach mindestens einem der Ansprüche 1-6,
**dadurch gekennzeichnet, dass**
die Einrichtung zum Ansteuern der Lichtquelle in eine rechnergesteuerte Auswerteeinheit (4) integriert ist.

8. Vorrichtung nach Anspruch 7,
**dadurch gekennzeichnet, dass**
die Einrichtung zum Ansteuern der Lichtquelle eine rechnergesteuerte Stromquelle (5) mit einem Referenzlichtquellen-Rückkopplungsnetzwerk (7) ist.

9. Vorrichtung nach mindestens einem der Ansprüche 1-8,
**dadurch gekennzeichnet, dass**
die Matrixlichtquelle (1) modular aufgebaut und durch Zusatzmodule erweiterbar ist.

10. Vorrichtung nach mindestens einem der Ansprüche 1-9,
**dadurch gekennzeichnet, dass**
die Matrixlichtquelle (13) als XY-Matrix ausgebildet ist und die Ströme der Festkörperlichtquellen individuell steuerbar sind.

11. Vorrichtung nach Anspruch 10, zurückbezogen auf mindestens einen der Ansprüche 1 und 5-9,
**dadurch gekennzeichnet, dass**
die Matrixlichtquelle (1) Gruppen von Festkörperlichtquellen unterschiedlicher spektraler Lichtaussendung aufweist und
durch geeignete Ansteuerung der Gruppen ein gewünschtes Mischspektrum erzeugbar ist.

## Claims

1. A device for testing solar cells having
a defined matrix light source (1) for shining a beam of light on the solar cells (2),
a device having a current regulator for driving the light source and
an evaluation unit (4) for the electrical connection to a solar cell (2) being tested and for determining the electrical output generated by the solar cell that is exposed to the beam, and, if appropriate, for comparison to the output of a calibrated reference cell (11), **wherein** the matrix light source is composed of solid-state light sources, whose emitted beam is essentially monochromatic and lies in the preferred spectral sensitivity range of the solar cells (2) to be measured.

2. The device as recited in Claim 1, for testing Si solar cells (2), in particular assuming the generation of a specific beam intensity of 1200 W/m² at 25° C, **wherein** the matrix light source has solid-state light sources, which emit a beam having a maximum in the infrared range, preferably at 880 nm.

3. The device as recited in Claim 1, for testing CIS or CdTe solar cells (2), in particular assuming the generation of a specific beam intensity of 1200 W/m² at 25° C, **wherein** the matrix light source has solid-state light sources, which emit a beam having a maximum in the red range, preferably at 600 nm or 700 nm.

4. The device as recited in Claim 1, for testing solar cells (2) made of amorphous silicon, in particular assuming the generation of a specific beam intensity of 1200 W/m² at 25° C, **wherein** the matrix light source has solid-state light sources, which emit a beam having a maximum in the blue or blue-violet range, preferably at 450 nm.

5. The device as recited in Claim 1 or 2-4, **wherein** the matrix light source for testing 10 x 10 cm solar cells has at least 400 solid-state light sources.

6. The device as recited in at least one of Claims 1-5, **wherein** the solid-state light sources are LEDs having lens-shaped beam openings, and their matrix-like arrangement at a spacing of 4.3 mm +/- 10% produces a roughly homogeneous beam surface.

7. The device as recited in at least one of Claims 1-6, **wherein** the device for driving the light source is integrated into an evaluation unit (4) that is controlled by a computer.

8. The device as recited in Claim 7, **wherein** the device for driving the light source is a computer-controlled energy source (5) having a reference-light- source feedback network (7).

9. The device as recited in at least one of Claims 1-8, **wherein** the matrix light source (1) is constructed in modular fashion and can be expanded by supplemental modules.

10. The device as recited in at least one of Claims 1-9, **wherein** the matrix light source (13) is configured as an X-Y matrix, and the currents of the solid-state light sources are individually controllable.

11. The device as recited in Claim 10, with reference to at least one of Claims 1 and 5-9, **wherein** the matrix light source (1) has groups of solid-state light sources having various spectral light emissions, and
a desired mixed spectrum can be generated by appropriately driving the groups.

## Revendications

1. Dispositif de contrôle de cellules solaires avec une source lumineuse matricielle (1) définie pour l'irradiation des cellules solaires (2),
une installation d'amorçage de la source lumineuse avec un régulateur d'intensité de courant ainsi que
une unité d'évaluation (4) pour la connexion électrique avec une cellule solaire (2) à contrôler et pour l'enregistrement de la puissance électrique émise par la cellule solaire irradiée et le cas échéant, pour la comparaison avec la puissance d'une cellule de référence (11) calibrée,
**caractérisé en ce que**
la source lumineuse matricielle est composée de sources lumineuses solides, dont l'émission de rayonnement s'effectue essentiellement de façon monochromatique et dans la plage de sensibilité spectrale préférée des cellules solaires (2) à mesurer.

2. Dispositif, selon la revendication 1, de contrôle de cellules solaires (2) Si, notamment avec dégagement d'une puissance de rayonnement spécifique de 1200 W/m² à 25°C,
**caractérisé en ce que**
la source lumineuse matricielle présente des sources lumineuses solides qui émettent un rayonnement avec un maximum dans la plage infrarouge, de préférence à 880 nm.

3. Dispositif, selon la revendication 1, de contrôle de cellules solaires (2) CIS ou CdTe, notamment avec dégagement d'une puissance de rayonnement spécifique de 1200 W/m² à 25°C,
**caractérisé en ce que**
la source lumineuse matricielle présente des sources lumineuses solides qui émettent un rayonnement avec un maximum dans la plage infrarouge, de préférence à 600 nm ou 700 nm.

4. Dispositif, selon la revendication 1, de contrôle de cellules solaires (2) en silicium amorphe, notamment avec dégagement d'une puissance de rayonnement spécifique de 1200 W/m² à 25°C,
**caractérisé en ce que**
la source lumineuse matricielle présente des sources lumineuses solides qui émettent un rayonnement avec un maximum dans la plage bleue ou violet bleu, de préférence à 450 nm.

5. Dispositif selon la revendication 1 ou 2-4,
**caractérisé en ce que**
la source lumineuse matricielle présente au moins 400 sources lumineuses solides pour le contrôle de cellules solaires de 10 x 10 cm.

6. Dispositif selon l'une au moins des revendications 1-5,
**caractérisé en ce que**
les sources lumineuses solides sont des DEL avec des ouvertures de rayonnement lenticulaires et
leur disposition matricielle forme une surface de rayonnement presque homogène dans un intervalle de 4,3 mm ± 10 %.

7. Dispositif selon l'une au moins des revendications 1-6,
**caractérisé en ce que**
l'installation d'amorçage de la source lumineuse est intégrée dans une unité d'évaluation (4) commandée par ordinateur.

8. Dispositif selon la revendication 7,
**caractérisé en ce que**
l'installation d'amorçage de la source lumineuse est une source de courant (5) commandée par ordinateur avec un réseau de rétroaction de sources lumineuses de référence (7).

9. Dispositif selon l'une au moins des revendication 1-8,
**caractérisé en ce que**
la source lumineuse matricielle (1) est conçue de façon modulaire et peut être étendue par des modules additionnels.

10. Dispositif selon l'une au moins des revendications 1-9,
**caractérisé en ce que**
la source lumineuse matricielle (13) est conçue en tant que matrice XY et les courants des sources lumineuses solides sont excitables individuellement.

11. Dispositif selon la revendication 10, rapporté à l'une au moins des revendications 1 et 5-9,
**caractérisé en ce que**
la source lumineuse matricielle (1) présente des groupes de sources lumineuses solides d'émission lumineuse spectrale différente et
un spectre mixte peut être généré par un amorçage adéquat des groupes.
